(19) **Europäisches Patentamt**
**European Patent Office**
**Office européen des brevets**

(11) **EP 1 296 029 B1**

(12) **EUROPÄISCHE PATENTSCHRIFT**

(45) Veröffentlichungstag und Bekanntmachung des Hinweises auf die Patenterteilung:
**03.01.2007   Patentblatt 2007/01**

(51) Int Cl.:
*F01N 3/023* (2006.01)    *F02D 41/04* (2006.01)

(21) Anmeldenummer: **02016522.1**

(22) Anmeldetag: **24.07.2002**

(54) **Verfahren und Vorrichtung zur Steuerung einer Brennkraftmaschine**

Method and apparatus for controlling an internal combustion engine

Méthode et dispositif de commande d'un moteur à combustion interne

(84) Benannte Vertragsstaaten:
**DE FR GB IT SE**

(30) Priorität: **19.09.2001   DE 10146099**
**27.03.2002   DE 10213660**

(43) Veröffentlichungstag der Anmeldung:
**26.03.2003   Patentblatt 2003/13**

(73) Patentinhaber: **ROBERT BOSCH GMBH**
**70442 Stuttgart (DE)**

(72) Erfinder:
• **Plote, Holger**
**70736 Fellbach-Oeffingen (DE)**
• **Krautter, Andreas**
**71711 Steinheim (DE)**
• **Mansbart, Matthias**
**71229 Leonberg (DE)**

• **Walter, Michael**
**70806 Kornwestheim (DE)**
• **Sojka, Juergen**
**70839 Gerlingen (DE)**
• **Stegmaier, Matthias**
**73560 Boeblingen/Rems (DE)**
• **Zein, Thomas**
**70435 Stuttgart (DE)**

(56) Entgegenhaltungen:
**EP-A- 0 411 445          WO-A-94/03711**
**DE-A- 19 933 774          US-A- 4 492 079**

• **PATENT ABSTRACTS OF JAPAN Bd. 0133, Nr. 98 (M-866), 5. September 1989 (1989-09-05) & JP 1 142211 A (ISUZU MOTORS LTD), 5. Juni 1989 (1989-06-05)**

**Beschreibung**

Stand der Technik

Die Erfindung betrifft ein Verfahren und eine Vorrichtung zur Steuerung einer Brennkraftmaschine, mit einem Abgasnachbehandlungssystem, das ein Partikelfilter umfasst.

Zur Verbesserung der Emissionen werden Fahrzeuge, insbesondere Fahrzeuge mit Dieselmotoren, mit Partikelfiltern ausgestattet. Zur Steuerung solcher Abgasnachbehandlungssysteme und/oder zur Überwachung des Zustandes solcher Abgasnachbehandlungssysteme wird üblicherweise eine Größe ausgewertet, die den Strömungswiderstand des Abgasnachbehandlungssystems bzw. einzelner Komponenten, wie beispielsweise des Partikelfilters, charakterisieren. Die Kontrolle der Beladung bei Partikelfiltern und die Regenerationsüberwachung erfolgt mit Drucksensoren, da das Druckgefälle über das Filter Rückschlüsse auf die im Filter angesammelte Russmasse ermöglicht. Der zu messende Differenzdruck über dem Filter hängt ferner vom Abgasvolumenstrom ab.

Bei modernen Pkw-Motoren mit Abgasrückführung ist üblicherweise ein Luftmassensensor vorhanden, dessen Messsignal auch zur Bestimmung des Abgasvolumenstroms verwendet werden kann. Soll dieser Sensor eingespart werden oder liegt ein System ohne Luftmassensensor vor, ist die Bestimmung des Abgasvolumenstroms nicht ohne weiteres möglich, da diese Größe nicht unmittelbar direkt gemessen werden kann oder da dies enorme Kosten verursacht.

Aus der US 4,492,079 A ist ein Verfahren zur Ermittlung des Beladungszustands eines Partikelfilters bekannt geworden, bei welchem der am Partikelfilter auftretende Differenzdruck erfasst und als Maß für den Beladungszustand des Partikelfilters herangezogen wird, wobei der Abgasvolumenstrom berücksichtigt wird. Die vorbekannte Lösung sieht vor, neben dem am Partikelfilter auftretenden Differenzdruck, den an einem stromabwärts nach dem Partikelfilter angeordneten Schalldämpfer auftretenden Differenzdruck zu erfassen und die beiden erfassten Drucke in Bezug zueinander zu setzen. Bei einer zunehmenden Beladung des Partikelfilters steigt der am Partikelfilter auftretende Differenzdruck, während der am Schalldämpfer auftretende Differenzdruck als konstant angenommen wird und nur vom Abgasvolumenstrom abhängt. Durch eine Verhältnisbildung der beiden Differenzdrucke wird ein Maß für den Beladungszustand des Partikelfilters erhalten, welches unabhängig vom Abgasvolumenstrom ist, der somit nicht erfasst werden muss.

Der Erfindung liegt die Aufgabe zugrunde, ein Verfahren und eine Vorrichtung zur Steuerung einer Brennkraftmaschine anzugeben, die eine erhöhte Genauigkeit bei der Ermittlung des Beladungszustands eines Partikelfilters insbesondere dann ermöglichen, wenn kein Luftmassensensor zur Verfügung steht.

Die Aufgabe wird durch die in den unabhängigen Ansprüchen angegebenen Merkmale jeweils gelöst.

Offenbarung der Erfindung

Die erfindungsgemäße Vorgehensweise zur Detektion des Beladungszustands eines Partikelfilters, bei dem als den Beladungszustand charakterisierende Größe der Strömungswiderstand des Partikelfilters herangezogen wird, der anhand des am Partikelfilter auftretenden Differenzdrucks und dem durch das Partikelfilter strömenden Volumenstrom ermittelt wird, bei dem weiterhin der an einem Schalldämpfer auftretende Differenzdruck ermittelt wird, sieht vor, dass aus dem am Schalldämpfer auftretenden Differenzdruck und dem Strömungswiderstand des Schalldämpfers der Volumenstrom ermittelt wird, welcher der Ermittlung des Partikelfilter-Beladungszustands zugrunde gelegt wird, und dass der Strömungswiderstand des Schalldämpfers von wenigstens einer Betriebsgröße der Brennkraftmaschine abhängig vorgegeben wird.

Insbesondere die Berücksichtigung wenigstens einer Betriebsgröße der Brennkraftmaschine bei der Festlegung des Strömungswiderstands des Schalldämpfers erhöht die Genauigkeit bei der Ermittlung des Beladungszustands des Partikelfilters dadurch, dass eine turbulente Strömung im Schalldämpfer auftreten kann, so dass der Strömungswiderstand bzw. der am Schalldämpfer abfallende Druck nicht mehr linear vom Abgasvolumenstrom abhängt.

Vorteilhafte Weiterbildungen und Ausgestaltungen der erfindungsgemäßen Vorgehensweise ergeben sich aus abhängigen Ansprüchen.

Eine Ausgestaltung sieht vor, dass der Strömungswiderstand des Schalldämpfers in Abhängigkeit von der Temperatur vorgegeben wird. Mit dieser Maßnahme ist eine weitere Erhöhung bei der Genauigkeit bei der Festlegung des Strömungswiderstands des Schalldämpfers möglich.

Eine andere Ausgestaltung sieht vor, dass der am Schalldämpfer auftretende Differenzdruck aus dem stromaufwärts vor dem Schalldämpfer gemessenen Druck und dem Atmosphärendruck ermittelt wird. Es kann davon ausgegangen werden, dass der Atmosphärendruck bei den heute in Kraftfahrzeugen eingesetzten Motor-Steuergeräten stets erfasst wird und somit zur Verfügung steht. Ein separater Sensor bzw. ein Differenzdrucksensor ist somit nicht erforderlich.

Die erfindungsgemäße Vorrichtung sieht ein speziell hergerichtetes Steuergerät zur Durchführung des Verfahrens vor.

Die Erfindung ist weiterhin auf ein Computerprogramm mit Programmcode-Mitteln gerichtet, um die erfindungsgemäßen Verfahrensschritte durchzuführen, wenn das Programm auf einem Computer, insbesondere auf einem Steuergerät für die Brennkraftmaschine ausgeführt wird.

Die Erfindung ist weiterhin auf ein Computerprogrammprodukt mit Programmcode-Mitteln gerichtet, die auf einem computerlesbaren Datenträger gespeichert sind, um die erfindungsgemäßen Verfahrensschritte durchzuführen, wenn das Programmprodukt auf einem Computer, insbesondere einem Steuergerät für die Brennkraftmaschine ausgeführt wird.

Weitere vorteilhafte Ausgestaltungen und Weiterbildungen der erfindungsgemäßen Vorgehensweise ergeben sich aus der folgenden Beschreibung.

Zeichnung

Die Erfindung wird nachstehend anhand der in der Zeichnung dargestellten Ausführungsformen erläutert. Es zeigen Figur 1 ein Blockdiagramm eines Systems zur Steuerung einer Brennkraftmaschine, Figur 2 ein Flussdiagramm zur Verdeutlichung der erfindungsgemäßen Vorgehensweise, Figur 3 ein Flussdiagramm zur Verdeutlichung einer weiteren Ausführungsform und die Figur 4 eine Blockdiagramm der erfindungsgemäßen Vorrichtung.

Beschreibung der Ausführungsbeispiele

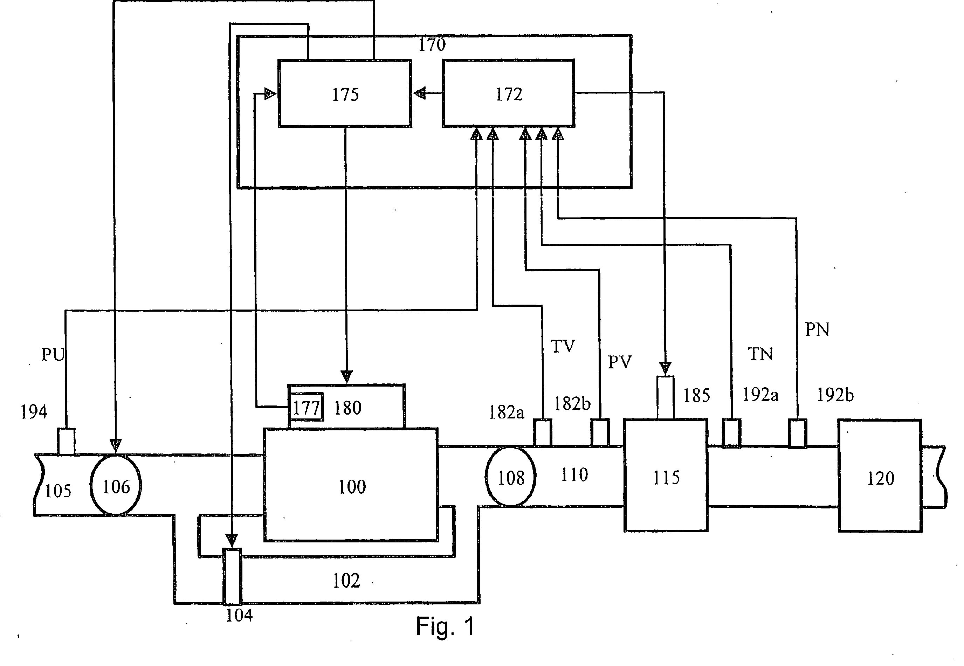

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Hinter dem Abgasnachbehandlungssystem 115 ist üblicherweise ein Schalldämpfer 120 angeordnet.

Desweiteren ist eine Steuereinheit 170 vorgesehen, die wenigstens eine Motorsteuereinheit 175 und eine Abgasnachbehandlungssteuereinheit 172 umfasst. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 185, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Druck PU der Umgebungsluft charakterisiert. Ein zweiter Sensor 177 liefert Signale, die den Zustand des Kraftstoffzumesssystems 180 charakterisieren. Sensoren 182a und 182b liefern Signale, die den Zustand des Abgases vor dem Abgasnachbehandlungssystem charakterisieren. Sensoren 192a und 192b liefern Signale, die den Zustand des Abgases nach dem Abgasnachbehandlungssystem und vor dem Schalldämpfer 120 charakterisieren Vorzugsweise werden Sensoren 182a und 192a, die Temperaturwerte TV und/oder TN und/oder Sensoren 182b und 192b, die Druckwerte PV und/oder PN erfassen verwendet.

Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen der Sensoren 182a, 182b, 192a, 192b und 194 wird vorzugsweise die Abgasnachbehandlungssteuereinheit 172 beaufschlagt. Mit den Ausgangssignalen des Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Bei der dargestellten Ausführungsform ist in der Ansaugleitung 105 ein Verdichter 106 und in der Abgasleitung 110 eine Turbine 108 angeordnet. Die Turbine wird durch das durchströmende Abgas angetrieben und treibt über eine nicht dargestellte Welle den Verdichter 106 an. Durch geeignete Ansteuerung kann die Luftmenge, die der Verdichter verdichtet, gesteuert werden.

Ferner ist die Leitung 110 für eine Abgasrückführleitung 102 mit der Ansaugleitung 105 verbunden. In der Abgasrückführleitung 102 ist ein Abgasrückführventil 104 angeordnet, das ebenfalls von der Steuereinheit 175 ansteuerbar ist.

Bei der dargestellten Ausführungsform ist sowohl eine Abgasrückführung als auch ein steuerbarer Abgasturbolader vorgesehen. Erfindungsgemäß kann auch lediglich eine Abgasrückführung und lediglich ein gesteuerter Abgasturbolader vorgesehen sein.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie bei Abgasnachbehandlungssystemen eingesetzt werden, bei denen ein Katalysator und ein Partikelfilter kombiniert sind. Desweiteren ist sie einsetzbar bei Systemen, die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses misst dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn das Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass das Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 185 dem Abgas zugeführt werden, die dann eine entsprechende Reaktion im Abgasnachbehandlungssystem 115 hervorrufen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet. Als Größe, die den Beladungszustand charakterisiert, wird vorzugsweise der Strömungswiderstand des Partikelfilters verwendet. Der Strömungswiderstand wird im wesentlichen ausgehend von der Druckdifferenz über den Partikelfilter und dem Volumenstrom, der durch den Partikelfilter strömt, bestimmt.

Umfasst die Brennkraftmaschine keinen Luftmassenmesser, so kann der Volumenstrom, der durch den Partikelfilter strömt, nicht ohne weiteres ermittelt werden. Mit der im folgenden beschriebenen Vorgehensweise ist eine Bestimmung des Abgasvolumenstromes und damit eine genaue Beladungs- und Regenerationsüberwachung eines Partikelfilters auch bei Brennkraftmaschinen ohne Luftmassenmesser, wie beispielsweise bei LKW-Motoren, möglich.

Erfindungsgemäß ist vorgesehen, dass das Abgassystem nach dem Dieselpartikelfilter ein Absolutdrucksensor umfasst, um den Druckabfall über dem Schalldämpfer 120 zu bestimmen. Ausgehend von dem bekannten Strömungswiderstand des Schalldämpfers kann der Abgasmassenstrom durch den Schalldämpfer bestimmt werden. Da sowohl der Schalldämpfer als auch der Partikelfilter vom selben Abgasvolumenstrom durchströmt werden, wird ausgehend von dem Differenzdruck über dem Partikelfilter und dem so bestimmten Abgasvolumenstrom der Strömungswiderstand des Partikelfilters bestimmt.

Erfindungsgemäß ist deshalb vorgesehen, dass ein in einem ersten Schritt 200 der Differenzdruck DP2 zwischen dem Ein-und Ausgang des Schalldämpfers erfasst wird. Hierzu kann zum einen vorgesehen sein, dass ein Differenzdrucksensor verwendet wird oder dass ein Absolutdrucksensor 192b, der den Druck PN vor dem Schalldämpfer erfasst, und ein zweiter Absolutdrucksensor 194 verwendet werden, der den Druck PU hinter dem Schalldämpfer erfasst. Der Druck hinter dem Schalldämpfer entspricht üblicherweise dem Atmosphärendruck PU, der bereits für andere Zwecke von der Steuereinheit erfasst und ausgewertet wird.

In einem zweiten Schritt 210 wird der Strömungswiderstand W2 des Schalldämpfers ausgehend von verschiedenen Betriebsparametern wie beispielsweise der Motordrehzahl N und der Last, oder einer die Last kennzeichnenden Größe, wie beispielsweise die Einspritzmenge, bestimmt.

In einem nächsten Schritt 220 wird ausgehend von dem Strömungswiderstand W2 und dem Differenzdruck DP2 der Abgasvolumenstrom VS durch den Schalldämpfer gemäß der folgenden Formel bestimmt.

$$VS = DP2/W2$$

Im anschließenden Schritt 230 wird dann der Differenzdruck DP1 über den Partikelfilter entsprechend wie in Schritt 200 bestimmt, d. h. es kann zum einen ein Differenzdrucksensor oder zwei Absolutdrucksensoren 182b und 192b verwendet werden.

Im anschließenden Schritt 240 wird dann der Strömungswiderstand W1 des Partikelfilters ausgehend von dem Differenzdruck DP1 und dem Volumenstrom VS gemäß der folgenden Formel bestimmt.

$$W1 = DP1/VS$$

Der Strömungswiderstand W1 des Partikelfilters dient zur Steuerung und/oder Überwachung des Partikelfilters.

Besonders vorteilhaft ist es, wenn die Volumenstromgröße VS für weitere Steuerungen und/oder Diagnoseaufgaben, insbesondere für das Abgassystem und/oder zur Steuerung der Abgasrückführrate verwendet wird.

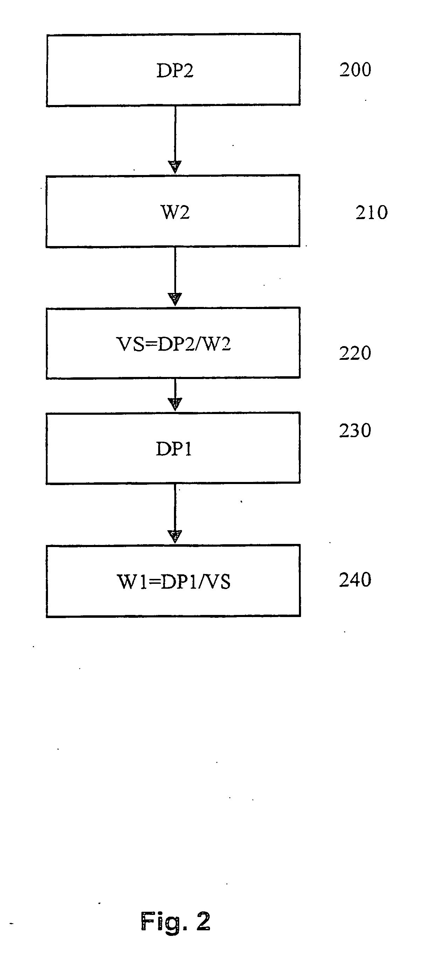

Bei der in Figur 2 beschriebenen Ausführungsform wird ein vom Betriebszustand, insbesondere der Drehzahl und der eingespritzten Kraftstoffmenge abhängiger Strömungswiderstand W2 des Schalldämpfers angenommen. Eine Genauigkeitserhöhung ist durch die Verwendung eines zusätzlichen Temperatursensors möglich.

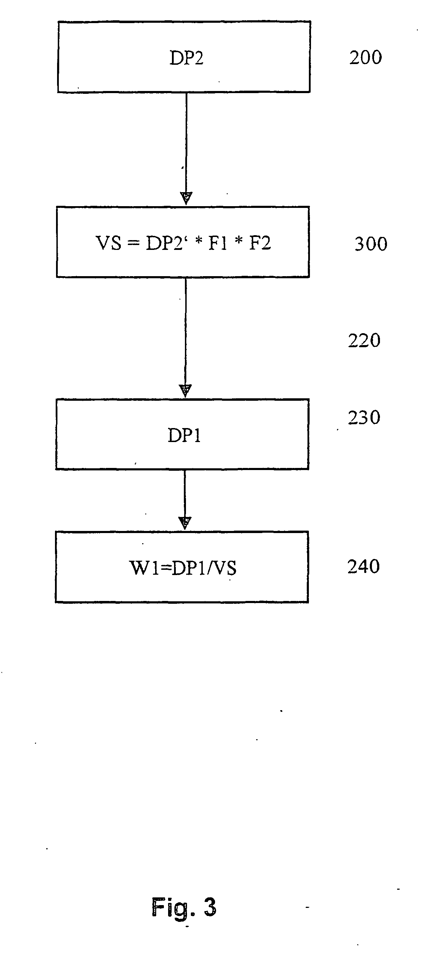

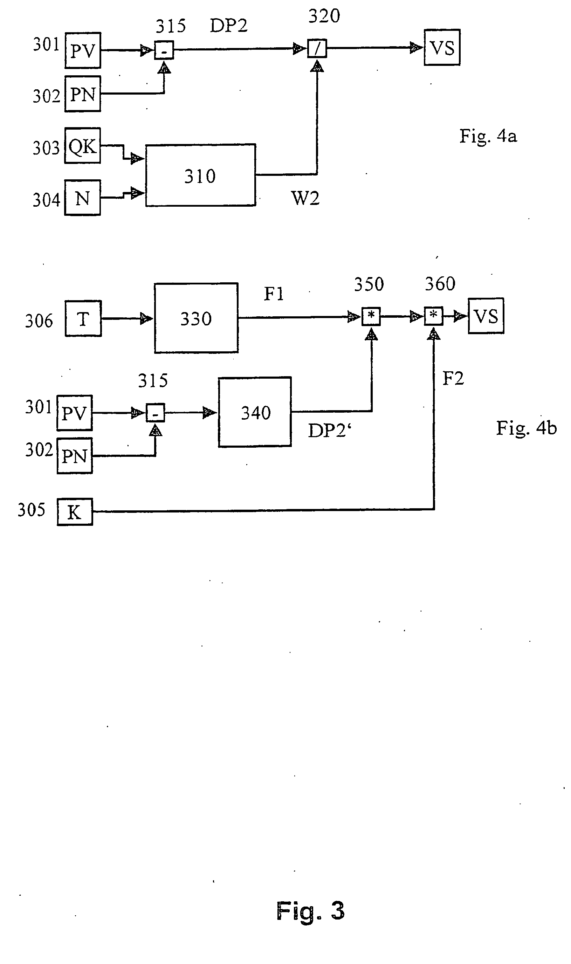

Bei der in Figur 3 dargestellten Ausführungsform wird der Abgasvolumenstrom V2 durch eine Nachbildung des Schalldämpfers durch ein durchströmtes Rohr simuliert. Dabei gilt für den Volumenstrom VS die Gleichung:

VS = F1 * F2 * DP2' von verschiedenen Faktoren F1, F2 und DP2'. Bei der Größe F1 handelt es sich um eine oder mehrere temperaturhängige Kenngrößen, die vorzugsweise in einem Kennfeld abhängig von der Temperatur des Abgases abgelegt sind. Der Faktor F2 beinhaltet im Wesentlichen geometrische Kenngrößen des Schalldämpfers, die experimentell ermittelt werden können. Bei der Größe DP2' handelt es sich um eine im wesentlichen durch den Differenzdruck über den Schalldämpfer bestimmte Größe.

Die Ausführungsform der Figur 3 unterscheidet sich im Wesentlichen von der Ausführungsform gemäß Figur 2 darin, dass die Schritte 210 und 220 durch den Schritt 300 ersetzt sind. In dem Schritt 300 wird der Abgasvolumenstrom VS mittels der angegebenen Formel bestimmt. Dabei charakterisieren die Größen F1 und F2 den Strömungswiderstand des Schalldämpfers. Im Gegensatz zur Ausführungsform der Figur 2 wird nicht der Strömungswiderstand direkt ermittelt, sondern es wird der Abgasvolumenstrom vorzugsweise durch Multiplikation mehrere Faktoren F1, F2 und DP2' gebildet.

In Figur 4a und 4b sind die beiden Ausführungsformen als Blockdiagramm dargestellt. Bei der Ausführungsform gemäß Figur 4a sind zwei Sensoren vorgesehen, die den Druck vor und den Druck nach dem Schalldämpfer ermitteln. Diese können auch durch ein Differenzdrucksensor ersetzt werden. Ein erstes Signalvorgabemittel 301 liefert ein Signal PV, das den Druck PV vor dem Schalldämpfer charakterisiert, und ein zweites Signalvorgabemittel 302 liefert ein Signal PN, das den Druck nach dem Schalldämpfer charakterisiert. Des Weiteren liefert ein drittes Signalvorgabemittel 303 eine Größe QK, die die einzuspritzende Kraftstoffmenge QK charakterisiert, und ein viertes Signalvorgabemittel 304 liefert ein Signal bezüglich der Drehzahl der Brennkraftmaschine.

Bei den ersten, zweiten und vierten Signalvorgabemitteln handelt es sich bevorzugt um Sensoren, bei der dritten Signalvorgabe handelt es sich bevorzugt um das Steuergerät, bei dem die einzuspritzende Kraftstoffmenge als interne Größe vorliegt. Alternativ können auch die anderen Größen intern im Steuergerät, ausgehend von anderen Betriebskenngrößen, gebildet werden. Des Weiteren ist es möglich, dass weitere Betriebskenngrößen berücksichtigt werden.

Das Signal bezüglich der einzuspritzenden Kraftstoffmenge QK und der Drehzahl gelangen zu einem Kennfeld 310, an dessen Ausgang der Strömungswiderstand W2 des Schalldämpfers anliegt. Die Ausgangssignale PV und PN gelangen zu einem Subtrahierer 315, der als Ausgangsgröße den Differenzdruck DP2 über den Schalldämpfer ausgibt. Die beiden Größen DP2 und W2 gelangen zu einem Divisionspunkt 320, an dessen Ausgangssignal der Abgasvolumenstrom VS anliegt.

Dies bedeutet, in dem Kennfeld 310 ist der Strömungswiderstand des Schalldämpfers abhängig von verschiedenen Betriebskenngrößen abgelegt. Ausgehend von dem Differenzdruck, der mittels Sensoren gemessen wird, und dem Strömungswiderstand W2 des Schalldämpfers wird dann durch die Division der Abgasvolumenstrom berechnet.

Bei der Ausführungsform gemäß Figur 4B ist neben der ersten und zweiten Signalvorgabe eine fünfte Signalvorgabe 305, die eine konstante Größe F2 vorgibt und eine sechste Signalvorgabe 306, die ein Temperatursignal T liefert, vorgesehen. Die Ausgangssignale PV und PN der ersten und zweiten Signalvorgaben gelangen zu einem Subtrahierer 315, der als Ausgangsgröße den Differenzdruck DP2 über den Schalldämpfer ausgibt. Das Ausgangssignal des Subtraktionspunktes 315 gelangt zu einem Kennfeld 340, an dem eine vom Differenzdruck abhängige Größe DP2' anliegt. Das Ausgangssignal T der sechsten Signalvorgabe 306 gelangt über eine Kennlinie 330, in der die Temperaturabhängigkeit physikalischer Größen des Abgasvolumenstroms abgelegt ist, zu einem Verknüpfungspunkt 350. Die Ausgangssignale der beiden Kennfelder werden in dem Verknüpfungspunkt 350 multiplikativ verknüpft. Das Ausgangssignal des Verknüpfungspunktes 350 gelangt zu einem Verknüpfungspunkt 360, an dessen zweiten Eingang das Ausgangssignal F2 der fünften Signalvorgabe 305 anliegt.

Im Wesentlichen bildet dieses Blockdiagramm die obige Formel nach. Der Volumenstrom VS wird ausgehend von einem ersten Faktor F1, einem zweiten Faktor F2 und einer vom Differenzdruck über den Schalldämpfer abhängigen Größe DP2' durch Multiplikation berechnet. Der Faktor F1 berücksichtigt eine oder mehrere temperaturabhängige Kenngrößen, die vorzugsweise in einem Kennfeld und/oder in einem oder mehreren Kennlinien abhängig von der Temperatur des Abgases abgelegt sind. Der Faktor F2 beinhaltet im Wesentlichen geometrische Kenngrößen des Schalldämpfers, die im wesentlichen konstant sind.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

**Patentansprüche**

1. Verfahren zur Detektion des Beladungszustands eines Partikelfilters (115), bei dem als Größe, welche den Beladungszustand charakterisiert, der Strömungswiderstand (W1) des Partikelfilters (115) herangezogen wird, der anhand des am Partikelfilter (115) auftretenden Differenzdrucks (dp1) und dem durch das Partikelfilter (115) strömenden Volumenstrom (VS) ermittelt wird, bei dem weiterhin der an einem Schalldämpfer (120) auftretende Differenzdruck (dp2) ermittelt wird, **dadurch gekennzeichnet, dass** aus dem am Schalldämpfer (120) auftretenden Differenzdruck (dp2) und dem Strömungswiderstand (W2) des Schalldämpfers (120) der Volumenstrom (VS) ermittelt wird, welcher der Ermittlung des Partikelfilter-Beladungszustands zugrunde gelegt wird und dass der Strömungswiderstand (W2) des Schalldämpfers (120) von wenigstens einer Betriebsgröße der Brennkraftmaschine (100) abhängig vorgegeben wird.

2. Verfahren nach Anspruch 1, **dadurch gekennzeichnet, dass** der Strömungswiderstand (W2) des Schalldämpfers (120) in Abhängigkeit von der Temperatur vorgegeben wird.

3. Verfahren nach Anspruch 1, **dadurch gekennzeichnet, dass** der am Schalldämpfer (120) auftretende Differenzdruck (dp2) aus dem stromaufwärts vor dem Schalldämpfer (120) gemessenen Druck (PN) und dem Atmosphärendruck (PU) ermittelt wird.

4. Vorrichtung zur Detektion des Beladungszustands eines Partikelfilters (115), bei dem ein zur Durchführung des Verfahrens nach einem der Ansprüche 1 bis 3 speziell hergerichtetes Steuergerät (170, 172, 175) vorgesehen ist.

5. Vorrichtung nach Anspruch 4, **dadurch gekennzeichnet, dass** eine Ermittlung des am Schalldämpfer (120) auftretenden Differenzdrucks (dp2) aus dem Signal (PN) eines stromaufwärts vor dem Schalldämpfer (120) angeordneten Drucksensors (192b) und dem Atmosphärendruck (PU) vorgesehen ist.

6. Computerprogramm mit Programmcode-Mitteln, um die Verfahrensschritte nach einem der Ansprüche 1 bis 3 durchzuführen, wenn das Programm auf einem Computer, insbesondere einem Steuergerät (170, 172, 175) für eine Brennkraftmaschine (100), ausgeführt wird.

7. Computerprogrammprodukt mit Programmcode-Mitteln, die auf einem computerlesbaren Datenträger gespeichert sind, um die Verfahrensschritte nach einem der Ansprüche 1 bis 3 durchzuführen, wenn das Programmprodukt auf einem Computer, insbesondere einem Steuergerät (170, 172, 175) für eine Brennkraftmaschine (100), ausgeführt wird.

**Claims**

1. Method for detecting the loading state of a particulate filter (115), in which method the flow resistance (W1) of the particulate filter (115) is used as a variable which characterizes the loading state, said flow resistance (W1) being determined on the basis of the differential pressure (dp1) occurring at the particulate filter (115) and the volume flow rate (VS) flowing through the particulate filter (115), in which method the differential pressure (dp2) occurring at a silencer (120) is also determined, **characterized in that** the volume flow rate (VS) on which the determination of the particulate filter loading state is based is determined from the differential pressure (dp2) occurring at the silencer (120) and the flow resistance (W2) of the silencer (120), and **in that** the flow resistance (W2) of the silencer (120) is predefined as a function of at least one operating variable of the internal combustion engine (100).

2. Method according to Claim 1, **characterized in that** the flow resistance (W2) of the silencer (120) is predefined as a function of the temperature.

3. Method according to Claim 1, **characterized in that** the differential pressure (dp2) occurring at the silencer (120) is determined from the atmospheric pressure (PU) and the pressure (PN) measured upstream of the silencer (120).

**4.** Device for detecting the loading state of a particulate filter (115), in which a control unit (170, 172, 175) which is specifically set up for carrying out the method according to one of Claims 1 to 3 is provided.

**5.** Device according to Claim 4, **characterized in that** the differential pressure (dp2) occurring at the silencer (120) is determined from the atmospheric pressure (PU) and the signal (PN) of a pressure sensor (192b) which is arranged upstream of the silencer (120).

**6.** Computer programme having programme code means in order to carry out the method steps according to one of Claims 1 to 3, if the programme is executed on a computer, in particular a control unit (170, 172, 175) for an internal combustion engine (100).

**7.** Computer programme product having programme code means which are stored on a computer-readable data carrier in order to carry out the method steps according to one of Claims 1 to 3, if the programme product is executed on a computer, in particular a control unit (170, 172, 175) for an internal combustion engine (100).

## Revendications

**1.** Procédé de détection de l'état de charge d'un filtre à particules (115) selon lequel on utilise comme grandeur caractérisant l'état de charge, la résistance à l'écoulement (W1) du filtre à particules (115), que l'on détermine à partir de la différence de pression (dp1) produite au niveau du filtre à particules (115) et du débit volumique (VS) traversant le filtre à particules (115), et en outre on détermine la différence de pression (dp2) produite au niveau d'un silencieux (120),
**caractérisée en ce qu'**
à partir de la différence de pression (dp2) au niveau du silencieux (120) et de la résistance à l'écoulement (W2) du silencieux (120), on détermine le débit volumique (VS) servant à déterminer l'état de charge du filtre à particules, et
on prédéfinit la résistance à l'écoulement (W2) du silencieux (120) à partir d'au moins un paramètre de fonctionnement du moteur à combustion (100).

**2.** Procédé selon la revendication 1,
**caractérisé en ce qu'**
on prédéfinit la résistance à l'écoulement (W2) du silencieux (120) en fonction de la température.

**3.** Procédé selon la revendication 1,

**caractérisé en ce qu'**
on détermine la différence de pression (dp2) qui se produit au niveau du silencieux (120) à partir de la pression (pn) mesurée en amont du silencieux (120) et de la pression atmosphérique (PU).

**4.** Dispositif de détection de l'état de charge d'un filtre à particules (115) comportant un dispositif de commande (170, 172, 175) réalisé spécialement pour la mise en oeuvre du procédé selon l'une des revendications 1 à 3.

**5.** Dispositif selon la revendication 4,
**caractérisé en ce qu'**
on détermine la différence de pression (dp2) produite au niveau du silencieux (120) à partir du signal (PN) d'un capteur de pression (192b) installé en amont du silencieux (120) et de la pression atmosphérique (PU).

**6.** Programme d'ordinateur comportant des moyens de codes de programmes pour exécuter les étapes de procédé selon l'une des revendications 1 à 3, lorsque le programme est exécuté sur un ordinateur notamment un appareil de commande (170, 172, 175) d'un moteur à combustion (100).

**7.** Produit programme d'ordinateur comportant des moyens de codes de programmes enregistrés sur un support de données susceptible d'être lu par un ordinateur pour exécuter les étapes de procédé selon l'une des revendications 1 à 3, lorsque le produit programme est exécuté sur un ordinateur notamment un appareil de commande (170, 172, 175) d'un moteur à combustion (100).

EP 1 296 029 B1

Fig. 1

$$\boxed{\text{DP2}} \quad 200$$

$\downarrow$

$$\boxed{\text{W2}} \quad 210$$

$\downarrow$

$$\boxed{\text{VS=DP2/W2}} \quad 220$$

$\downarrow$

$$\boxed{\text{DP1}} \quad 230$$

$\downarrow$

$$\boxed{\text{W1=DP1/VS}} \quad 240$$

**Fig. 2**

```
┌─────────────────────────────┐
│                             │
│            DP2              │      200
│                             │
└─────────────────────────────┘
              │
              ▼
┌─────────────────────────────┐
│                             │
│      VS = DP2' * F1 * F2    │      300
│                             │
└─────────────────────────────┘
              │
                                     220
              │
              ▼
┌─────────────────────────────┐     230
│                             │
│            DP1              │
│                             │
└─────────────────────────────┘
              │
              ▼
┌─────────────────────────────┐
│                             │
│          W1=DP1/VS          │      240
│                             │
└─────────────────────────────┘
```

# Fig. 3

Fig. 4a

Fig. 4b

## Fig. 3